(19) Europäisches Patentamt
European Patent Office
Office européen des brevets

(11) Numéro de publication: **0 058 808**
**A1**

(12) # DEMANDE DE BREVET EUROPEEN

(21) Numéro de dépôt: **81420022.6**

(22) Date de dépôt: **19.02.81**

(51) Int. Cl.³: **B 30 B 1/26**, B 44 B 5/00, F 16 H 21/18

(43) Date de publication de la demande: **01.09.82 Bulletin 82/35**

(84) Etats contractants désignés: **BE CH DE GB IT LI**

(71) Demandeur: **Kis France Société dite:, 47 Avenue Marie Reynoard, F-38100 Grenoble (FR)**

(72) Inventeur: **Crasnianski, Serge, 11, Chemin des Buisses, F-38240 Meylan (FR)**
Inventeur: **Soriano, Louis, La Percevalière, F-38170 Seyssinet Pariset (FR)**

(74) Mandataire: **Laurent, Michel et al, Bureaux Chalin A1 20, rue Louis Chirpaz Boîte Postale 32, F-69130 Lyon-Ecully (FR)**

(54) **Machine à estamper les plaques d'immatriculation.**

(57) L'invention concerne une machine à estamper les plaques d'immatriculation.

Dans cette machine automatique pour estamper une plaque d'immatriculation (31), du type comportant un moteur (22) solidaire du bâti et destiné à actionner un ensemble d'estampage à poinçon et matrice (5, 6, 7) par l'intermédiaire d'un système d'embrayage, ce dernier est un système rotatif sans glissement formé par un excentrique (2 à 4) monté fou sur l'arbre moteur (1) et venant presser le système d'estampage (5 à 7), au cours de sa rotation, par suite de son blocage automatique sur ledit arbre.

Application notamment aux appareils d'estampage de plaques minéralogiques de véhicules automobiles.

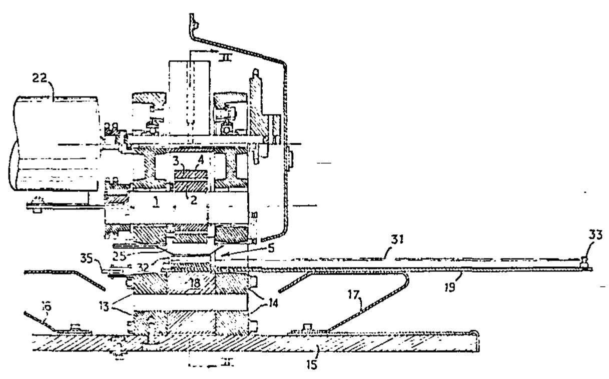


EP 0 058 808 A1

"MACHINE A ESTAMPER LES PLAQUES D'IMMATRICULATION

La présente invention concerne une machine automatique à estamper les plaques d'immatriculation, notamment pour véhicules automobiles, du type comportant un moteur solidaire du bâti de la machine et destiné à actionner un ensemble d'estampage à poinçon et matrice par l'intermédiaire d'un système d'embrayage.

Dans le domaine du commerce et de l'industrie et notamment de l'automobile, on connaît déjà bon nombre de machines à estamper les plaques d'immatriculation. Qu'il s'agisse de machines industrielles pour l'estampage simultané d'un ensemble de caractères, chiffres ou lettres, ou de petites machines manuelles pour l'estampage de caractères un par un sur la plaque, le procédé mis en oeuvre est classique et parfaitement connu dans la technque. On utilise habituellement une plaque vierge en aluminium épais comportant un placage en duralumin mince, de couleur noire par exemple, et que l'on dispose entre un poinçon et une matrice, le poinçon étant constitué par une plaquette portant le caractère en relief, alors que la matrice porte le caractère correspondant imprimé en creux. Le poinçon et la matrice sont alors pressés l'un vers l'autre, avec en général la mise en oeuvre d'une force d'environ 6000 daN pour l'estampage d'un caractère. Le relief du poinçon étant d'une hauteur inférieure à l'épaisseur de la plaque d'aluminium, il se produit un semi-découpage de cette dernière avec déformation, créant sur la face de ladite plaque, portant le placage, un relief ayant la forme du caractère choisi. Le placage en duralumin noir ayant été découpé par effet de cisaillement et ayant été dégagé de la plaque d'aluminium, on obtient donc le caractère en relief de couleur aluminium sur un fond noir.

Dans l'industrie, il existe des machines de ce type, dans lesquelles se trouve réalisé l'estampage simultané de plusieurs caractères. Cependant outre le

fait d'être encombrantes et lourdes, de telles machines sont d'un prix de revient élevé. Par ailleurs, on connaît de petites machines à actionnement manuel, qui sont légères, aisément transportables, d'un encombrement réduit et d'un prix intéressant, notamment pour des magasins de taille réduite et des revendeurs d'articles pour voitures automobiles, qui proposent à leurs clients des plaques d'immatriculation prêtes à être estampées sur le champ. Leur inconvénient est de ne pas être automatiques et de ne pas permettre un estampage rapide de tous les caractères à marquer sur la plaque d'immatriculation.

La présente invention a pour but de développer une machine de second type indiqué ci-dessus, qui, à ses avantages d'encombrement, de poids et de prix de revient réduits, associe l'avantage d'un fonctionnement automatique, rapide et fiable.

L'idée de départ de l'invention réside dans le fait que l'estampage de chaque caractère nécessite une force de 6000 daN, tout en ne provoquant qu'un déplacement de matière de 1,5 mm, et que par conséquent le travail nécessaire est faible. Ainsi en automatisant l'estampage successif des caractères, on pourrait utiliser une petite machine, dans laquelle il suffirait d'emmagasiner l'énergie fournie par un moteur de taille réduite à l'aide d'un volant d'inertie et de la libérer sur une course de 1,5 mm pour l'actionnement de l'ensemble d'estampage à poinçon et matrice, et ce par un système d'embrayage simple, peu coûteux et sans glissement, tel que le volant tourne en permanence, alors que l'actionnement de l'ensemble d'estampage ne doit avoir lieu qu'une fois par caractère, sans aucun entraînement entre deux caractères.

Ce problème est résolu conformément à l'invention à l'aide d'une machine du type indiqué plus haut, grâce au fait que le système d'embrayage est un système rotatif sans glissement formé par un excentrique monté

fou sur l'arbre moteur et venant presser l'ensemble d'estampage, au cours de sa rotation, par suite de son blocage automatique sur ledit arbre. Selon l'invention, l'excentrique du système d'embrayage est constitué par une couronne excentrée par rapport à l'axe de l'arbre moteur, et par une couronne extérieure concentrique à la couronne excentrée et montée sur cette dernière par l'intermédiaire de roulements et pouvant s'appliquer avec blocage contre l'ensemble d'estampage ; en outre, la couronne excentrée du système d'embrayage porte un ergot d'arrêt retenu par un crochet solidaire du bâti de la machine qui maintient la couronne extérieure du système d'embrayage dans sa position la plus écartée du marteau et est actionné par un électroaimant.

Selon une autre caractéristique de l'invention, plusieurs ensembles d'estampage sont disposés dans une table mobile déplaçable selon un mouvement pas à pas dans un plan perpendiculaire à l'axe de déplacement du marteau d'estampage et au plan de manoeuvre du système d'embrayage et chaque ensemble d'estampage porte un téton actionnant un microcommutateur solidaire du bâti de la machine et déclenchant l'électroaimant de manoeuvre du crochet de retenue de l'ergot d'arrêt de la couronne excentrée, un système de temporisation bloquant la table mobile en position pendant la durée d'un cycle d'embrayage et d'estampage, jusqu'à ce que l'ergot d'arrêt soit engagé dans son crochet de retenue.

D'autres variantes et caractéristiques de l'objet de l'invention ressortiront de la description donnée ci-après à titre d'exemple, non limitatif, d'une forme de réalisation de l'invention, en référence aux dessins annexés, qui représentent :

Figure 1, un schéma illustrant la constitution de principe de la machine conforme à l'invention ;

Figure 2, une vue en coupe longitudinale de la

machine conforme à l'invention, prise suivant la ligne II-II de la figure 3 ;

Figure 3, une vue en coupe transversale de la machine conforme à l'invention prise suivant la ligne III-III de la figure 2.

Figure 4, une vue en élévation latérale d'un détail du système de blocage à crochet et ergot de l'excentrique du dispositif des figures 1 à 3.

Sur la figure 1, qui est un schéma destiné à illustrer la constitution de principe de la machine conforme à l'invention, on a représenté l'arbre moteur 1 de la machine sur lequel est disposé le système d'embrayage rotatif sans glissement constitué par un excentrique monté fou sur l'arbre moteur 1 et qui se compose d'une couronne excentrée 2 enserrant l'arbre 1 et d'une couronne extérieure 3 concentrique à la couronne excentrée 2 et montée sur cette dernière par l'intermédiaire de roulements à aiguilles 4 et pouvant venir s'appliquer avec blocage contre un ensemble d'estampage 5 formé d'un poinçon 6 et d'une matrice 7 qui enserrent une plaque vierge 8 à immatriculer. La couronne excentrée 2 porte en outre un ergot d'arrêt 9 qui est retenu par un crochet 10 actionné par un électroaimant 11.

On va maintenant expliciter en détails le principe de fonctionnement de cette machine.

L'arbre moteur 1 tournant en permanence, l'ergot 9 solidaire de la couronne excentrée 2 est retenu par le crochet 10 et cette couronne, qui est montée folle sur l'arbre 1, se trouve alors dans sa position haute, c'est-à-dire dans sa position la plus écartée de l'ensemble d'estampage 5. Lorsque l'électroaimant 11 reçoit une impulsion électrique, le crochet 10 relâche l'ergot 9 et les forces de frottement résultant du contact de l'arbre 1 sur la couronne 2 entraînent celle-ci en rotation jusqu'au moment où la couronne extérieure 3 vient contacter la partie supérieure du poinçon 6. C'est dans cette position que se trouve représentée la machine sur la figure 1, sur laquelle on a également indiqué le rayon R de l'arbre moteur 1, la distance d'excentrage r de l'axe de la couronne 2 par rapport à l'axe de l'arbre 1, et les forces $F_1$, $F_2$, $F_3$ qui s'exercent alors. On va indiquer ci-après quelles sont ces forces.

Le couple moteur engage la couronne excentrée à la façon d'un coin et à un instant donné, c'est-à-dire pour une position angulaire fixée et toujours identique, la couronne extérieure 3 vient contacter la partie supérieure du poinçon 6. Il s'exerce alors la force de frottement $F_2$ tangentielle au niveau de l'interface circulaire arbre 1/couronne 2 et dirigée comme représenté sur la figure et qui provoque un entraînement de l'ensemble avec un effet de serrage "en coin". Ceci provoque l'apparition d'une force radiale $F_1$ et d'une force de réaction $F_3$ opposée à $F_1$, qui ont pour effet que la force $F_2$ s'accroît et ainsi de suite, en provoquant rapidement une action accrue de pression sur le poinçon réalisant l'estampage, l'action de serrage cessant au bout d'une durée de rotation, pour laquelle la couronne extérieure 3 s'écarte du poinçon, avec retenue ultérieure de la couronne excentrée 2 en position haute (fin d'un cycle d'estampage). La force $F_2$ est donnée par la relation :

$$F_2 = F_1 . tg\varphi$$

où $tg\varphi$ est le coefficient de frottement l'arbre/moteur/couronne excentrée. La condition de fonctionnement est que le couple moteur engendré par la force $F_2$ soit supérieur au couple résistant engendré par la force $F_3$.

Or le couple moteur $C_m$ est donné par la relation

$$C_m = F_2.R$$

soit : $C_m = F_1.tg\varphi.R$

et le couple résistant Cr est égal à :

$$C_r = F_3.r + F_3.f.D$$

où *f* est le coefficient de frottement du roulement à aiguilles.

La condition de fonctionnement s'exprime par le fait que $C_m$ doit être supérieur à $C_r$, c'est-à-dire que :

$$F_1 . tg\varphi . R > F_3 . r + F_3 . f . D$$

soit encore :

$$tg\varphi > \frac{F_3 . r + F_3 . f . D}{F_1 . R}$$

et, avec $F_3 = F_1$,

$$tg\varphi > \frac{r + f . D}{R}$$

Or il est connu que la valeur de $tg\varphi$ pour le contact acier/acier est telle que :

$$0,18 < tg\varphi < 0,35$$

Par conséquent, si l'arbre 1 et la couronne excentrée 2 sont réalisés en acier et si l'on prend comme valeurs r = 1,5 mm, R = 20 mm, f = 0,005 maximum et D = 30 mm, on obtient comme condition de fonctionnement $tg\varphi$ 0,08, ce qui est le cas d'après l'inégalité indiquée ci-dessus.

On va maintenant décrire de façon détaillée une forme de réalisation de la machine conforme à l'invention en référence aux figures 2 et 3. Sur ces figures, les pièces correspondant à celles représentées sur la figure 1 portent les mêmes chiffres de référence.

La machine à estamper se compose d'un bâti 12, formé de deux flasques latéraux verticaux 13, 14 dont les extrémités inférieures sont reliées à une embase 15 entre deux supports latéraux 16, 17, et enserrent entre elles une pièce intercalaire fixe 18 sur laquelle peut se déplacer transversalement une table mobile 19, dont la face inférieure porte une barre longitudinale de guidage 20 s'engageant dans une rainure longitudinale 21 ménagée dans la pièce intercalaire fixe 18. La partie supérieure du bâti, c'est-à-dire les parties supérieures des deux flasques latéraux 13, 14, porte un arbre moteur 1 relié à un moteur d'entraînement 22 par l'intermédiaire d'un volant 23 et d'un système d'entraînement à démultiplication 24 d'un type classique par exemple à chaînes ou courroies et arbre intermédiaire. Sur l'arbre 1, qui est horizontal et parallèle à la table mobile 19, est monté fou un système d'embrayage formé par un excentrique, constitué par une couronne excentrée 2 et par une couronne extérieure 3 concentrique à la couronne 2 et montée de manière à pouvoir rouler sur le pourtour de cette dernière au moyen de roulements à aiguilles 4.

En outre, la partie supérieure du bâti 12 comporte un marteau d'estampage 25, pouvant coulisser verticalement dans cette partie du bâti, au dessous dudit système d'embrayage. Ce marteau est maintenu élastiquement contre des butées non représentées, solidaires des flasques 13, 14 par l'intermédiaire de quatre ressorts de traction 26, de manière qu'il subsiste de préférence un jeu d'environ 0,3 mm entre ledit marteau d'estampage et le pourtour de la couronne extérieure 3, lorsque cette dernière est dans sa position "haute".

Comme cela est visible sur la figure 4, la couronne extérieure 3 du système d'embrayage peut être bloquée dans sa position haute au moyen d'un crochet de retenue 10 relié à un électroaimant 11 et dans lequel peut être bloqué un ergot d'arrêt 9, que porte la couronne 3.

Par ailleurs, la partie inférieure du bâti comporte en outre un moteur 27 dont l'arbre porte un pignon 28 qui engrène avec une crémaillère 29 qui est disposée sur l'un des côtés longitudinaux de la table mobile 19, de telle manière que cette dernière peut être entraînée en glissant sur la pièce 18 et les supports latéraux 16, 17. En outre, la table mobile 19 se compose d'un plateau dont la face supérieure porte un revêtement magnétique et est entourée par un rebord 30, qui permet d'y disposer, avec ajustement latéral, des ensembles

d'estampage 5, formés chacun d'un poinçon 6 et d'une matrice 7 de type classique, à plaque rectangulaire, reliés élastiquement entre eux et réalisés de préférence en acier et pouvant adhérer parfaitement à la table mobile 19. Ces ensembles d'estampage sont disposés sur la table mobile 19 moyennant la mise en place éventuelle de cales de largeurs préréglées entre eux, pour les besoins des immatriculations désirées, notamment de plaques de véhicules automobiles. Naturellement, la distance entre l'extrémité inférieure du marteau d'estampage 25, qui est destiné à venir s'appliquer contre la face supérieure des poinçons et l'extrémité supérieure de la pièce 18 solidaire du bâti est choisie de manière que les ensembles d'estampage 5, disposés côte à côte et à l'intérieur desquels la plaque vierge à immatriculer 31 est positionnée, puissent circuler sans frottement excessif sous ledit marteau. En outre la table mobile 19 porte à ses extrémités sur son axe longitudinal, des ergots respectifs 32, 33 sur lesquels la plaque à immatriculer 31 vient se fixer, au moyen de trous correspondants qu'elle comporte, ladite plaque étant posée renversée sur les matrices 7 des ensembles d'estampage.

Enfin la machine conforme à l'invention comporte plusieurs micro-commutateurs ou interrupteurs électriques, permettant la commande automatique des opérations lors de l'estampage complet des caractères d'une plaque à immatriculer. Il est prévu un microcommutateur 34 par exemple du type à roulette solidaire latéralement de la partie inférieure du bâti 12 et monté dans le plan médian longitudinal de la machine, sur le côté du bâti opposé à celui de moteur 27, de manière que, lors de la mise en place de la table mobile munie des ensembles d'estampage 5 et de la plaque 31, sa face inférieure actionne à un moment donné le commutateur 34. Le bâti 12 porte en outre un interrupteur de fin de course 35 destiné à limiter la course de déplacement de la table mobile 19 et à inverser son sens de déplacement pour la ramener dans sa position initiale, ainsi qu'un microcommutateur 36, qui est actionné par un téton 37 que porte, à l'une de ses extrémités, chaque ensemble d'estampage 5. Enfin il est prévu un autre microcommutateur 38 (figure 4) destiné à commander l'électroaimant 11 actionnant le crochet 10 et permettant le démarrage de l'estampage des différents caractères d'une plaque vierge à immatriculer 31.

Le circuit électrique de commande et d'alimentation des moteurs et des commutateurs peut être d'un type classique connu en soi et n'est donc pas représenté, mais on notera qu'il inclut un système de temporisation tel qu'il bloque la table mobile 19 en position pendant toute la durée d'un cycle d'estampage d'un caractère, et déclenche ensuite l'avance de la table jusqu'au caractère suivant.

Le fonctionnement de la machine pour l'ensemble de l'opération d'estampage d'une plaque d'immatriculation est le suivant : au départ, le moteur 22 tourne en permanence en entraînant en rotation l'arbre 1, cependant que le crochet 10 retient bloqué l'ergot 9 de la couronne 3, qui se trouve ainsi maintenue en position haute ; par ailleurs, le moteur 27 tourne lentement de manière à faciliter l'engagement de l'ensemble pignon 28/crémaillère 29, lorsque l'on met en place la table mobile 19, munie de la plaque 31 et des ensembles d'estampage 5. Lorsque cet engagement se produit correctement, le dessous de la table mobile 19 contacte le micro-commutateur 34, ce qui a pour effet de déclencher le blocage du moteur 27 ; la table mobile est alors arrêtée. On actionne alors un bouton de départ de l'opération d'estampage, qui provoque la mise en rotation du moteur 27 à vitesse normale. Celui-ci déplace donc vers la gauche (figure 3), la table mobile sur laquelle sont disposés les ensembles d'estampage 5 (dont un seul est représenté sur cette figure). Lorsque le téton 37 de cet ensemble 5 contacte le microcommutateur 36, c'est-à-dire lorsque l'ensemble 5, et donc le caractère à imprimer, est en position correcte au-dessous du marteau d'estampe 25, ledit micro-commutateur arrête le moteur 27 et ce pendant une durée prédéterminée dans le système de temporisation non représenté et correspondant à la durée du cycle d'embrayage/estampage. L'actionnement du microcommutateur 36 par le téton 37 provoque simultanément l'actionnement de l'électroaimant 11 qui tire en retrait le crochet 10, ce qui libère l'ergot 9. La couronne excentrée 2, qui se trouve alors libérée, tourne, sous l'effet du frottement acier/acier entre elle même et l'arbre 1, dans le sens de la flèche 5 (figure 1) et entraîne comme indiqué en référence à cette figure, la couronne extérieure 3 qui vient de s'appliquer contre la face supérieure du marteau d'estampe 25, qui lui-même vient presser la face supérieure du poinçon 6. Conformément au principe indiqué pour le schéma de la figure 1, il se produit une opération d'embrayage lors de laquelle la couronne excentrée 2, montée folle sur l'arbre 1, est entraînée par celui-ci et en est rendue temporairement solidaire - sans glissement - sous l'effet de serrage en coin, auquel le système couronne 2 - roulements 4 - couronne 3 est soumis conformément à ce qui a déjà été indiqué. Il se produit alors l'opération d'estampage proprement dite par suite de l'abaissement du marteau 25 qui provoque l'impression du caractère en place puis au bout d'un certain angle de rotation de l'arbre 1, l'effort de serrage en coin cesse et l'arbre 1 continue à entraîner le système excentrique 2-4-3 sous le simple effet du frottement acier/acier de 2 sur 1 jusqu'à ce que l'ergot d'arrêt 9 soit bloqué par le crochet de retenue 10, qui vainct aisément cette force. C'est après une durée incluant cet intervalle de temps,

que le système de temporisation fait redémarrer le moteur 27, qui entraîne la table mobile 19 jusqu'au positionnement du caractère suivant, et ainsi de suite jusqu'à sa venue en contact avec l'interrupteur de fin de course 35, qui provoque l'inversion du sens de déplacement de la table jusqu'à son retour en position initiale, c'est-à-dire totalement ressortie hors de la machine.

On notera que par suite de la constitution même du système d'embrayage de l'arbre moteur 1 (système couronne excentrée 2 - roulements 4 - couronne extérieure 3), l'embrayage s'effectue automatiquement sans que la charge ne soit appliquée en permanence. En effet lorsque l'autorisation est donnée, la charge est nulle. Elle s'applique progressivement sur environ un demi-tour de l'arbre et est ensuite nulle pendant le reste du tour. De plus la position angulaire du début de l'opération d'embrayage effectif est fixe et parfaitement déterminée et, compte tenu du dimensionnement relatif des pièces 1, 2, 3, 4 et du choix de leurs matériaux constitutifs, la condition de fonctionnement - sans glissement - se trouve parfaitement garantie.

Il est bien évident que la description, qui précède n'a été donnée qu'à titre d'exemple non limitatif et que d'autres variantes de réalisation de la machine selon l'invention peuvent être envisagées sans sortir pour autant du cadre de l'invention.

REVENDICATIONS

1. Machine automatique à estamper les plaques d'immatriculation, notamment pour véhicules automobiles, du type comportant un moteur solidaire du bâti et destiné à actionner un ensemble d'estampage à poinçon et matrice par l'intermédiaire d'un système d'embrayage, caractérisée par le fait que le système d'embrayage est un système rotatif sans glissement formé par un excentrique monté fou sur l'arbre moteur et venant presser le système d'estampage, au cours de sa rotation, par suite de son blocage automatique sur ledit arbre.

2. Machine suivant la revendication 1, caractérisée par le fait que l'excentrique du système d'embrayage est constitué par une couronne excentrée par rapport à l'axe de l'arbre moteur, et par une couronne extérieure concentrique à la couronne excentrée et montée sur cette dernière par l'intermédiaire de roulements et pouvant s'appliquer avec blocage contre l'ensemble d'estampage.

3. Machine suivant l'une des revendications 1 et 2 caractérisée par le fait :

qu'un marteau d'estampage est monté coulissant dans le bâti, entre la couronne concentrique extérieure du système d'embrayage et l'ensemble d'estampage,

qu'il existe un léger jeu entre ce marteau d'estampage et ladite couronne extérieure du système d'embrayage, lorsque cette dernière est dans sa position la plus écartée du marteau,

et en ce que ce marteau d'estampage est retenu dans le bâti de la machine, dans sa position la plus rapprochée du système d'embrayage, au moyen de ressorts de traction disposés symétriquement par rapport à l'axe de déplacement du marteau.

4. Machine suivant l'une des revendications 1 à 3, caractérisée par le fait que l'arbre moteur entraînant et portant le système d'embrayage est relié au moteur par l'intermédiaire d'un système de transmission à

à démultiplication et d'un volant d'inertie.

5. Machine suivant l'une des revendications 1 à 4, caractérisée par le fait que la couronne excentrée du système d'embrayage porte un ergot d'arrêt retenu par un crochet solidaire du bâti de la machine qui maintient la couronne extérieure du système d'embrayage dans sa position la plus écartée du marteau et est actionné par un électroaimant.

6. Machine suivant l'une des revendications 1 à 5, caractérisée par le fait que plusieurs ensembles d'estampage sont disposés dans une table mobile déplaçable selon un mouvement pas à pas dans un plan perpendiculaire à l'axe de déplacement du marteau d'estampage et au plan de manoeuvre du système d'embrayage.

7. Machine suivant l'une des revendications 1 à 6, caractérisée par le fait que chaque ensemble d'estampage porte un téton actionnant un microcommutateur solidaire du bâti de la machine et déclenchant l'électroaimant de manoeuvre du crochet de retenue de l'ergot d'arrêt de la couronne excentrée.

8/ Machine suivant l'une des revendications 1 à 9, caractérisée par le fait que le bâti de la machine porte :

- un microcommutateur actionné par le dessous de la table mobile lors de sa mise en place sur le bâti de la machine,

- un interrupteur de fin de course limitant la course de la table mobile et inversant son sens de déplacement.

9. Machine suivant l'une des revendications de 1 à 8, caractérisée par le fait qu'elle comporte un système de temporisation bloquant la table mobile en position pendant la durée d'un cycle d'embrayage et d'estampage, jusqu'à ce que l'ergot d'arrêt soit engagé dans son crochet de retenue.

10. Machine suivant l'une quelconque des revendications 1 à 9, caractérisée par le fait :

- que chaque ensemble d'estampage est maintenu en position sur la table mobile, dans un cadre entourant cette dernière, par adhérence magnétique,

- que la plaque de support de la matrice de l'ensemble d'estampage est en acier et que la table mobile est recouverte d'un caoutchouc magnétique.

- et en ce que la table mobile porte deux doigts de fixation tournés vers le haut, permettant l'accrochage de la plaque d'immatriculation, sur la table mobile, entre les poinçons et matrices des ensembles d'estampage.

11. Machine suivant l'une des revendications 6 à 10, caractérisée par le fait que la table mobile est guidée sur le bâti au moyen d'une barre de guidage coulissant dans une rainure de la face supérieure dudit bâti.

0058808



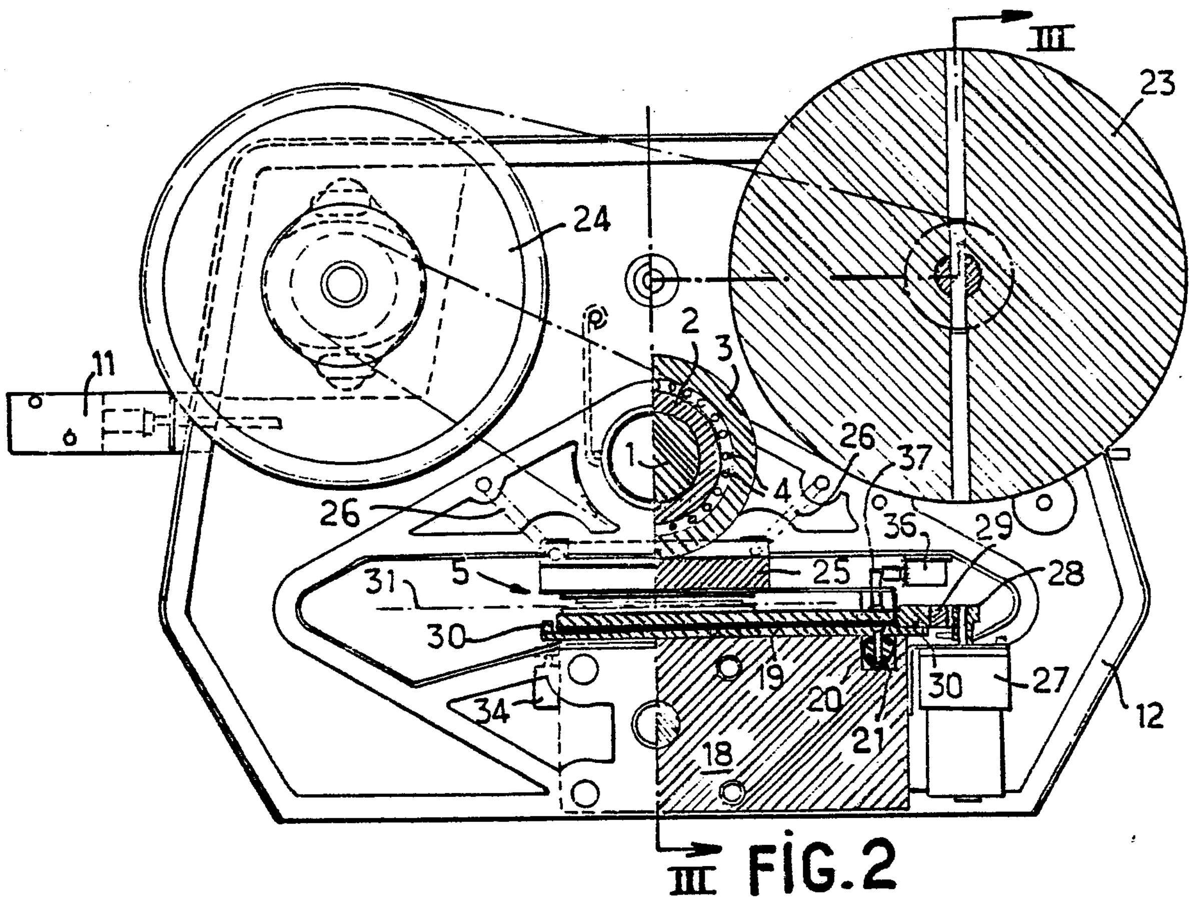


FIG.2

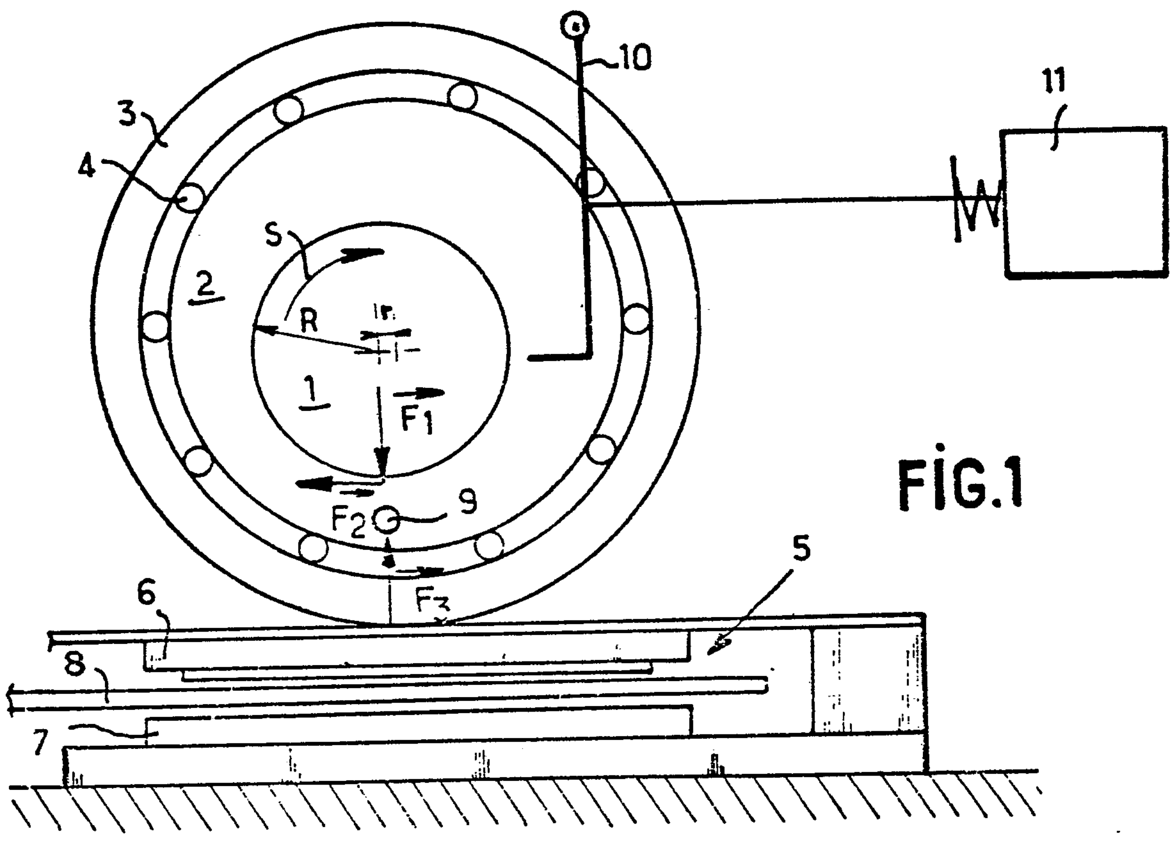


FIG.1

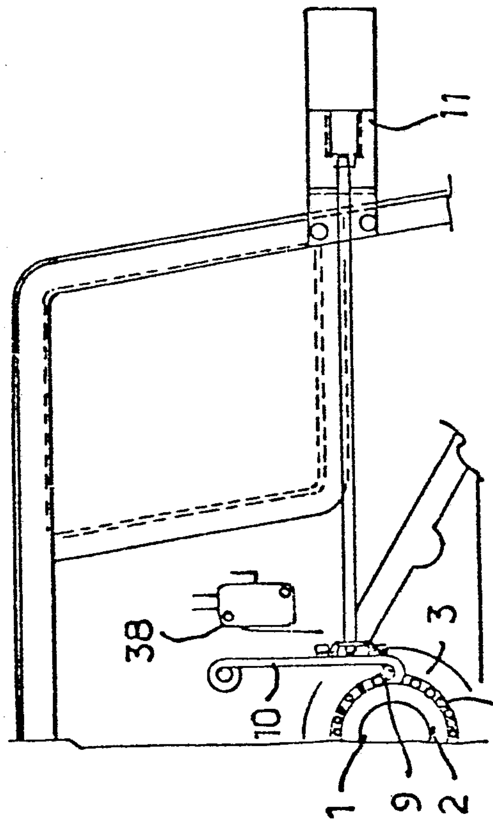


FIG. 4

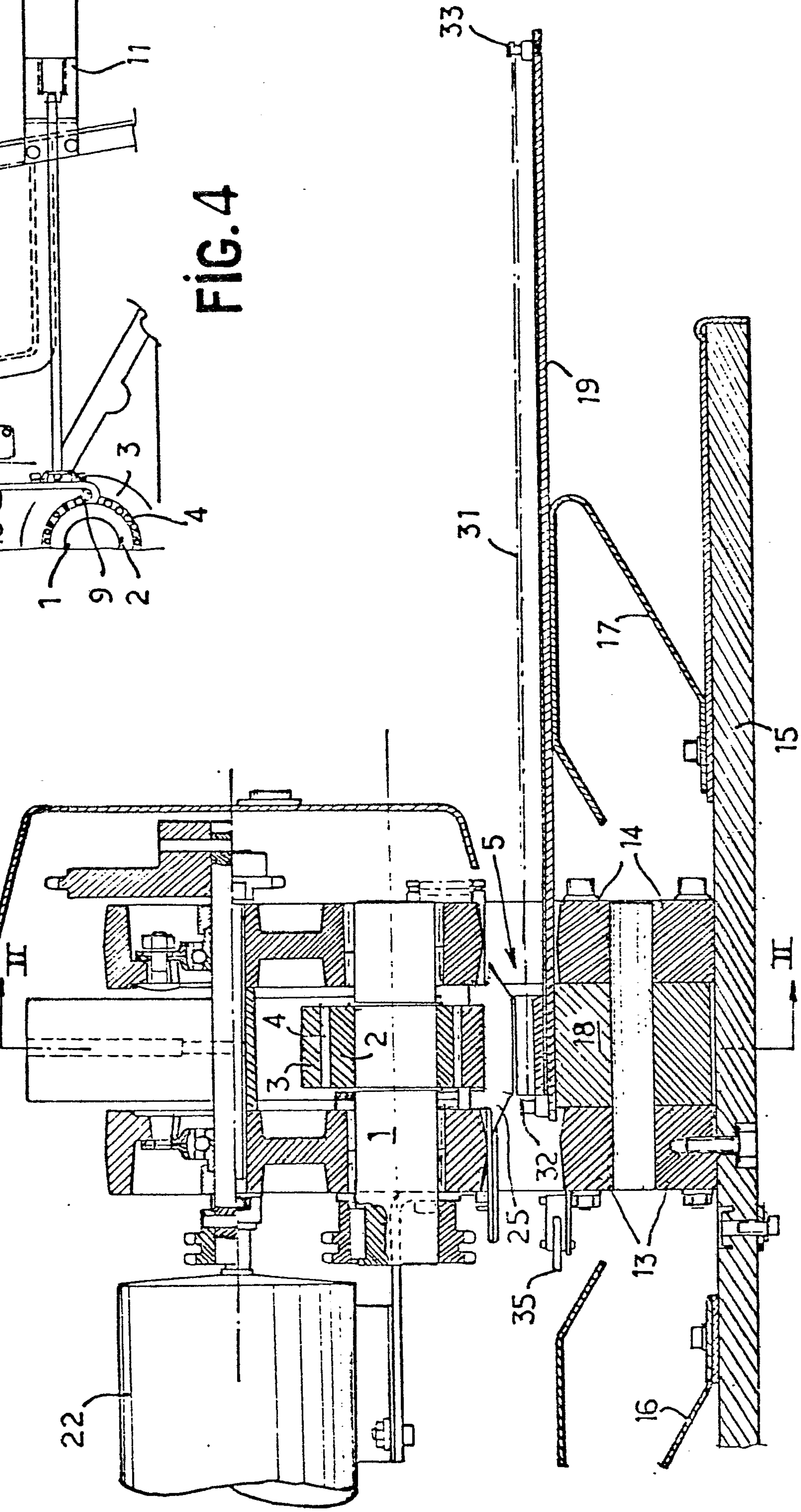


FIG. 3

Office européen des brevets

**RAPPORT DE RECHERCHE EUROPEENNE**

0058808

Numéro de la demande

EP 81 42 0022

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| A | FR - A - 1 473 945 (BOISSEAU; HENRY)<br>* En entier *<br>--- | 1 | B 30 B 1/26<br>B 44 B 5/00<br>F 16 H 21/18 |
| A | FR - A - 827 769 (P. RINGGER)<br>* En entier *<br>--- | 1 | |
| A | FR - A - 453 436 (E. LIANOSOFF)<br>* En entier *<br>--------- | 1 | |

**DOMAINES TECHNIQUES RECHERCHES (Int. Cl.³)**

B 30 B
F 16 H
B 44 B
G 09 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 08.10.1981 | BOLLEN |